# EUROPÄISCHE PATENTANMELDUNG

(11) **EP 1 695 748 A1**
(43) Veröffentlichungstag der Anmeldung: **30.08.2006**
(21) Anmeldenummer: 06450023.4
(22) Anmeldetag: 16.02.2006
(51) Int. Cl.: A63F 13/00, G07F 17/32

(54) **Vorrichtung zum Spielen von Geschicklichkeitsspielen**

(30) Priorität: 17.02.2005 AT 9105 U
(71) Anmelder: Stromer, Maximilian, 1010 Wien (AT)
(72) Erfinder: Stromer, Maximilian, 1010 Wien (AT)
(74) Vertreter: Haffner, Thomas M.

(57) **Zusammenfassung**

Bei einer Vorrichtung (1) zum Spielen von Geschicklichkeitsspielen mit einer Anzeigevorrichtung (8), wenigstens einer Taste (2,6) und einer Steuereinrichtung (9) zum Beeinflussen des Spielablaufes in Abhängigkeit von einer Tastenbetätigung, wobei die Steuereinrichtung (9) ein Zeitglied umfasst, welches den Zeitpunkt einer Tastenbetätigung erfasst, und die Steuereinrichtung (9) derart ausgebildet ist, dass der Spielablauf in Abhängigkeit vom Zeitpunkt einer Tastenbetätigung beeinflusst wird, weist die Steuereinrichtung einen Speicher (10) für eine Mehrzahl von vorbestimmten Zeitfenstern mit vorbestimmten zeitlichen Abständen zwischen den Zeitfenstern auf. Die Steuereinrichtung (9) ist derart ausgebildet, dass eine innerhalb eines Zeitfensters erfolgende Tastenbetätigung eine jeweils diesem Zeitfenster zugeordnete vordefinierte Spielbeeinflussung und eine außerhalb der Zeitfenster erfolgende Tastenbetätigung eine zufällige oder keine Beeinflussung des Spielverlaufs bewirkt.

## Beschreibung

Die Erfindung betrifft eine Vorrichtung zum Spielen von Geschicklichkeitsspielen mit einer Anzeigevorrichtung, wenigstens einer Taste und einer Steuereinrichtung zum Beeinflussen des Spielablaufes in Abhängigkeit von einer Tastenbetätigung, wobei die Steuereinrichtung ein Zeitglied umfasst, welches den Zeitpunkt einer Tastenbetätigung erfasst, und die Steuereinrichtung derart ausgebildet ist, dass der Spielablauf in Abhängigkeit vom Zeitpunkt einer Tastenbetätigung beeinflusst wird.

Derartige Vorrichtungen sind beispielsweise als Pokervorrichtungen bekannt geworden, wobei die Besonderheit darin besteht, dass abweichend von den herkömmlichen Pokervorrichtungen das Spielergebnis nicht ausschließlich vom Zufall sondern von der Geschicklichkeit des jeweiligen Spielers abhängig ist. Beispielsweise ist aus der AT 7248 U2 eine Pokervorrichtung bekannt geworden, welche eine Steuereinrichtung und ein Zeitglied aufweist, wobei durch das Zeitglied dem Benutzer der Pokervorrichtung eine Zeitspanne vorgegeben werden kann, innerhalb welcher er die Wertigkeit seiner Kartenauflage durch Geschicklichkeit verändern kann. Nach Ablauf der voreingestellten Zeitspanne ist eine Spielbeeinflussung durch den Spieler nicht mehr möglich, da das Spiel dann nur mehr durch einen Zufallsgenerator bestimmt wird.

Bei der Pokervorrichtung gemäß der AT 7248 U2 erfolgt die Auswahl einer bestimmten Karte während der oben genannten Zeitspanne dadurch, dass vom Zufallsgenerator nacheinander jeweils eine Karte auf die Anzeigevorrichtung gebracht wird, wobei der Spieler den Zufallsgenerator dann rechtzeitig ausschalten muss, wenn er die vom Zufallsgenerator gerade auf die Anzeige gebrachte Spielkarte im Spiel halten möchte. Der Spieler kann somit abhängig von seiner Geschicklichkeit lediglich eine derjenigen Karten im Spiel halten, die ihm vom Zufallsgenerator angeboten werden. Ein derartiges Pokerspiel kann daher nicht als Spiel bezeichnet werden, das im überwiegenden Maße von der Geschicklichkeit des Spielers abhängig ist. Vielmehr könnte ein derartiges Spiel als Glücksspiel angesehen werden, wobei Glücksspiele in der Regel zahlreichen gesetzlichen Beschränkungen unterliegen.

Die vorliegende Erfindung zielt darauf ab, eine Spielvorrichtung zu schaffen, bei welcher das jeweils gespielte Spiel in überwiegendem Ausmaß von der Geschicklichkeit des jeweiligen Spielers beeinflusst werden kann. Darüber hinaus soll es bei der Vorrichtung möglich sein, verschiedene Schwierigkeitsstufen einzustellen, d.h. die Anforderungen an die Geschicklichkeit des jeweiligen Spielers zu ändern, um die Gewinnchancen des Spielers beeinflussen bzw. die Ertragsmöglichkeiten des Spielbetreibers einstellen zu können.

Zur Lösung dieser Aufgabe besteht die erfindungsgemäße Vorrichtung im Wesentlichen darin, dass die Steuereinrichtung einen Speicher für eine Mehrzahl von vorbestimmten Zeitfenstern mit vorbestimmten zeitlichen Abständen zwischen den Zeitfenstern aufweist und die Steuereinrichtung derart ausgebildet ist, dass eine innerhalb eines Zeitfensters erfolgende Tastenbetätigung eine jeweils diesem Zeitfenster zugeordnete vordefinierte Spielbeeinflussung und eine außerhalb der Zeitfenster erfolgende Tastenbetätigung eine zufällige oder keine Beeinflussung des Spielverlaufs bewirkt. Dadurch, dass vorbestimmte Zeitfenster in einem Speicher abgespeichert sind, wird die Möglichkeit geschaffen, in der Folge lediglich diejenigen Tastenbetätigungen für die Beeinflussung des Spielverlaufs zu berücksichtigen, welche innerhalb der vordefinierten Zeitfenster erfolgen. Es ist somit der Geschicklichkeit des jeweiligen Spielers überlassen, die Tastenbetätigung zeitlich mit einer derartigen Präzision vorzunehmen, dass sie zu einem innerhalb eines Zeitfensters liegenden Zeitpunkt erfolgt. Lediglich dann, wenn eine Tastenbetätigung innerhalb eines bestimmten Zeitfensters erfolgt, wird das Spiel auf eine vom Spieler gewünschte Weise beeinflusst. Dabei ist es wesentlich, dass jedem Zeitfenster eine vorbestimmte Spielbeeinflussung zugeordnet ist, sodass der Spieler durch Wahl des jeweiligen Zeitfensters die diesem Zeitfenster zugeordnete Spielbeeinflussung wählen kann. Die den einzelnen Zeitfenstern zugeordneten Spielbeeinflussungen sind erfindungsgemäß vordefiniert, d.h., dass dem Spieler zuvor die Möglichkeit gegeben wurde, die einzelnen Möglichkeiten der Spielbeeinflussung zur Kenntnis zu nehmen. Dadurch ist sichergestellt, dass die Möglichkeiten der Spielbeeinflussung nicht willkürlich bzw. zufällig sind, sondern dass der Spieler durch gezielte Wahl des Zeitpunktes der Tastenbetätigung ein bestimmtes Spielereignis zu verursachen vermag.

Der Schwierigkeitsgrad des Spieles kann durch Veränderung der zeitlichen Länge der einzelnen Zeitfenster gesteuert werden. Je kürzer die Zeitfenster gewählt sind, desto schwieriger ist es, die Tastenbetätigung zeitlich derart präzise vorzunehmen, dass sie innerhalb des Zeitfensters liegt. Durch die Veränderung des Geschicklichkeitsgrades, welcher erforderlich ist, um das Spiel gezielt zu beeinflussen, können die Gewinnchancen des Spielers durch den Spielbetreiber eingestellt werden, womit für den Spielbetreiber auch sichergestellt ist, dass trotz Vorliegen eines Geschicklichkeitsspiels seine finanziellen Erträge gesichert sind, da ihm der Spieleinsatz zufließt, wenn der Spieler das Spiel verliert. Um das Spiel jedoch nicht unnötig zu erschweren, ist bevorzugt vorgesehen, dass die zeitliche Länge aller Zeitfenster gleich gewählt ist, sodass ein gewisses Maß an Reproduzierbarkeit gegeben ist. Weiters kann vorgesehen sein, dass der zeitliche Abstand zwischen zwei aufeinander folgenden Zeitfenstern gleich gewählt ist.

Besonders bevorzugt kann die erfindungsgemäße Vorrichtung zum Spielen von Kartenspielen verwendet werden, wobei die Vorrichtung in diesem Fall derart weitergebildet ist, dass ein Symbolspeicher mit einer Mehrzahl von Symbolen, wie z.B. Spielkartensymbolen, vorgesehen ist, dass die Anzeigevorrichtung zur Anzeige einer Teilmenge der Mehrzahl von Symbolen ausgebildet ist und dass die Steuereinrichtung derart ausgebildet ist, dass in Abhängigkeit vom Zeitpunkt einer Tastenbetätigung wenigstens eines der auf die Anzeigevorrichtung zur Anzeige gebrachten Symbole ausgetauscht werden kann, wobei eine innerhalb eines Zeitfensters erfolgende Tastenbetätigung die Anzeige eines diesem Zeitfenster zugeordneten, vordefinierten Symbols und eine außerhalb der Zeitfenster erfolgende Tastenbetätigung die Anzeige eines mit Hilfe eines Zufallsgenerators ausgewählten Symbols bewirkt. Das Spiel kann in diesem Fall derart gestaltet sein, dass auf der Anzeigevorrichtung zunächst eine von einem Zufallsgenerator ausgewählte Kombination an Karten angezeigt wird, wobei in der Folge einzelne dieser angezeigten Karten im Spiel gehalten werden und andere ausgetauscht werden können. Der Austauschvorgang erfolgt dann derart, dass eine innerhalb eines vordefinierten Zeitfensters erfolgende Tastenbetätigung eine diesem Zeitfenster zugeordnete vordefinierte Karte anstelle der nicht gehaltenen Karte ins Spiel gebracht wird. Die den einzelnen Zeitfenstern zugeordneten Karten wurden dem Spieler dabei vorher zur Kenntnis gebracht, sodass die vom Spieler gewünschten Karten durch gezielte Auswahl des richtigen Zeitpunkts der Tastenbetätigung ins Spiel gebracht werden können. Damit handelt es sich um ein Spiel, das vorwiegend von der Geschicklichkeit des Spielers beeinflusst werden kann.

Die Erfindung wird nachfolgend anhand von zwei Ausführungsbeispielen näher erläutert, wobei im ersten Ausführungsbeispiel eine Pokervorrichtung und im zweiten Ausführungsbeispiel eine slot machine beschrieben werden.

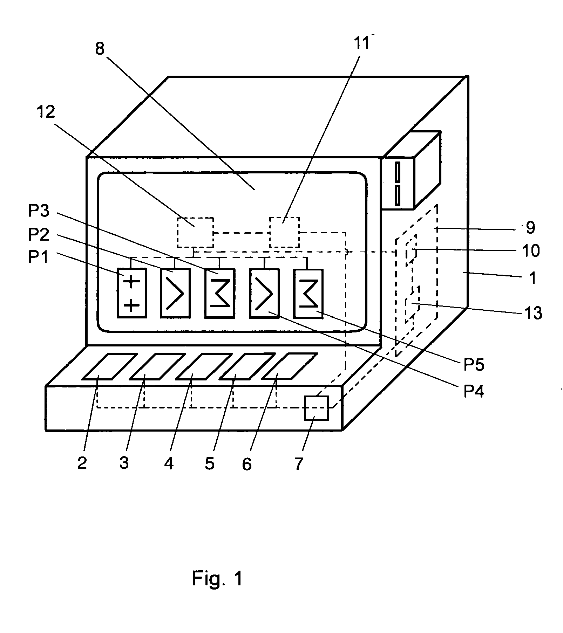

In Fig.1 ist eine Pokervorrichtung 1 ersichtlich, welche an Ihrem Konsolentisch Betätigungstasten 2, 3, 4, 5 und 6 sowie eine Start-Taste 7 aufweist. Am Bildschirm bzw. der Anzeigevorrichtung 8 ist eine aus fünf Karten bestehende Kartenauflage ersichtlich. Die Karten befinden sich hierbei auf den Positionen P1 bis P5. Weiters ist eine Steuereinrichtung 9 mit einem Speicher 10 vorgesehen, in welchem eine Mehrzahl von Karten in Form eines Rasters gespeichert ist. Beispielsweise kann in diesem Speicher folgender Raster mit folgenden Spielkarten gespeichert sein:

| Position1 | Position2 | Position3 | Position4 | Position5 |
|---|---|---|---|---|
| Herz König 1 Auflage | Herz 10 | Karo Bube | Pik 8 | Herz 7 |
| Karo As 2 Auflage | Pik 3 | Pik 2 | Herz 5 | Karo 6 |
| Pik Dame 3 Auflage | Karo Dame | Pik Bube | Herz Bube | Kreuz 3 |
| Herz 2 4 Auflage | Herz 3 | Kreuz 4 | Kreuz 7 | Kreuz 8 |
| Herz Dame 5 Auflage | Karo 7 | Joker | Karo 4 | Herz 9 |
| Karo 2 6 Auflage | Herz 6 | Pik 5 | Karo 9 | Herz As |
| Pik 4 7 Auflage | Pik 7 | Pik As | Karo 10 | Karo 9 |
| Karo 8 8 Auflage | Karo König | Kreuz 6 | Kreuz Dame | Pik König |
| Kreuz 5 9 Auflage | Pik 10 | Pik 6 | Kreuz König | Karo 3 |
| Kreuz As 10 Auflage | Pik 9 | Karo 2 | Karo 10 | Herz 8 |
| Herz 4 11 Auflage | | Kreuz | Bube | Karo 5 |

Zu Beginn des Spieles werden nach Betätigen der Start-Taste 7 aus dem virtuellen Kartenstapel 11 vom Zufallsgenerator 12 fünf Karten gezogen und an den entsprechenden Positionen P1 bis P5 am Bildschirm 8 angezeigt. Beispielsweise können folgende Karten angezeigt werden:

| P1 | P2 | P3 | P4 | P5 | |
|---|---|---|---|---|---|
| Herz 2 | Herz 3 | Kreuz 4 | Kreuz 7 | Kreuz 8 | 1 Auflage |

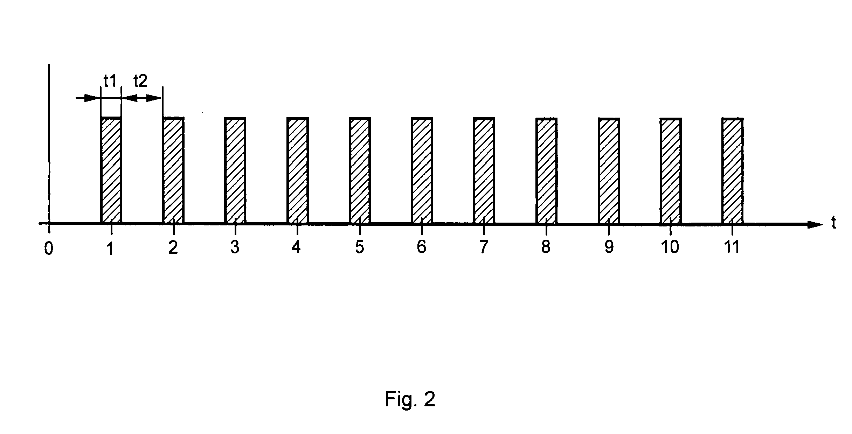

In diesem Fall strebt der Spieler ein Straight Flush an. Er möchte also die letzten drei Karten an den Positionen P3 bis P5 im Spiel behalten und an den Positionen P1 und P2 Kreuz-Karten mit den Werten 5 und 6 erhalten. Zu diesem Zweck drückt er die Tasten 4, 5 und 6 kurz, sodass die diesen Tasten entsprechenden Positionen P3, P4 und P5 nicht durch neue Karten ersetzt werden und so im Spiel gehalten werden. Um nun an den Positionen P1 und P2 die entsprechenden Kreuz-Karten mit den Werten 5 und 6 zu erhalten, muss sich der Spieler die im Speicher 11 abgelegten Karten sowie deren Position innerhalb des virtuellen Rasters ins Gedächtnis rufen. Um beispielsweise die Kreuz-Karte mit dem Wert 6 zu selektieren, muss der Spieler wissen, dass eine derartige Karte sich im Speicher in der achten Auflage an Position 3 befindet, wie aus der obigen Übersicht ersichtlich ist. Der Spieler muss also die Taste 4, welche der Position 3 entspricht, nach ca. acht Sekunden betätigen, da die gewünschte Karte in der achten Auflage innerhalb des virtuellen Rasters im Speicher 10 enthalten ist. Die Betätigungszeit wird mit dem mit den Betätigungstasten verbundenen Zeitglied 13 erfasst, sodass die entsprechende im Speicher 10 enthaltene Karte selektiert und in weiterer Folge anstelle der nicht im Spiel gehaltenen Karte ins laufende Spiel gebracht werden kann. Analog kann der Spieler die Kreuz-Karte mit dem Wert 5 dadurch ins Spiel bringen, dass er die Taste 2, welche der Position 1 entspricht, nach ca. neun Sekunden betätigt. Erfindungsgemäß ist aber vorgesehen, dass nicht jeder vom Zeitglied 13 erfasste Betätigungszeitpunkt das Selektieren der gewünschten Karte bewirkt. Vielmehr ist im Speicher 10 bzw. in einem gesonderten Speicher eine Mehrzahl vom vorbestimmten Zeitfenstern abgespeichert, wobei jedem Zeitfenster eine bestimmte Kartenauflage aus dem oben genannten Raster entspricht. Die im Speicher 10 gespeicherten Zeitfenster sind beispielsweise derart gestaltet, wie in Fig.2 dargestellt.

In der Fig.2 ist die Zeitachse mit t bezeichnet und erstreckt sich vom 0 bis 11 Sekunden. Im Bereich jeder Sekunde ist ein Zeitfenster vorgesehen, welches schraffiert dargestellt ist. Die zeitliche Länge eines Zeitfensters ist mit t1 bezeichnet, der zeitliche Abstand zwischen zwei aufeinander folgenden Zeitfenstern mit t2. Zu einem gewissen Zeitpunkt beginnt das Zeitglied 13 bei 0 beginnend die Zeit zu messen, wobei lediglich diejenigen Tastenbetätigungen berücksichtigt werden, welche innerhalb eines Zeitfensters liegen. Soll im oben genannten Beispiel die Kreuz-Karte mit dem Wert 6 ins Spiel gebracht werden, so muss die entsprechende Taste zu einem Zeitpunkt betätigt werden, welcher genau 8 Sekunden nach dem Zeitpunkt liegt, zu welchem das Zeitglied begonnen hat, die Zeit zu messen. Dabei wird nicht nur eine Tastenbetätigung als gültig akzeptiert, welche genau zu einem Zeitpunkt nach 8 Sekunden erfolgt, sondern auch eine Tastenbetätigung, welche innerhalb des durch das Zeitfenster vorgegebenen Toleranzbereichs t1 liegt. Erfolgt die Tastenbetätigung hingegen im Zeitraum t2 zwischen zwei Zeitfenstern, so bleibt diese Tastenbetätigung für den Spielablauf unberücksichtigt oder es erfolgt eine zufällig gewählte Spielbeeinflussung. Es ist ersichtlich, dass der Schwierigkeitsgrad des Spiels durch die Wahl des Zeitraums t1, d.h. durch Wahl der zeitlichen Länge der Zeitfenster beeinflusst werden kann, wobei der Schwierigkeitsgrad umso höher ist, je geringer der Zeitraum t1 gewählt wird.
Im obigen Ausführungsbeispiel wurden der Einfachheit halber die Zeitwerte in Sekunden angegeben. In der Praxis werden aber in der Regel kürzere Zeiten verwendet, um das Spiel nicht zu sehr zu verzögern.

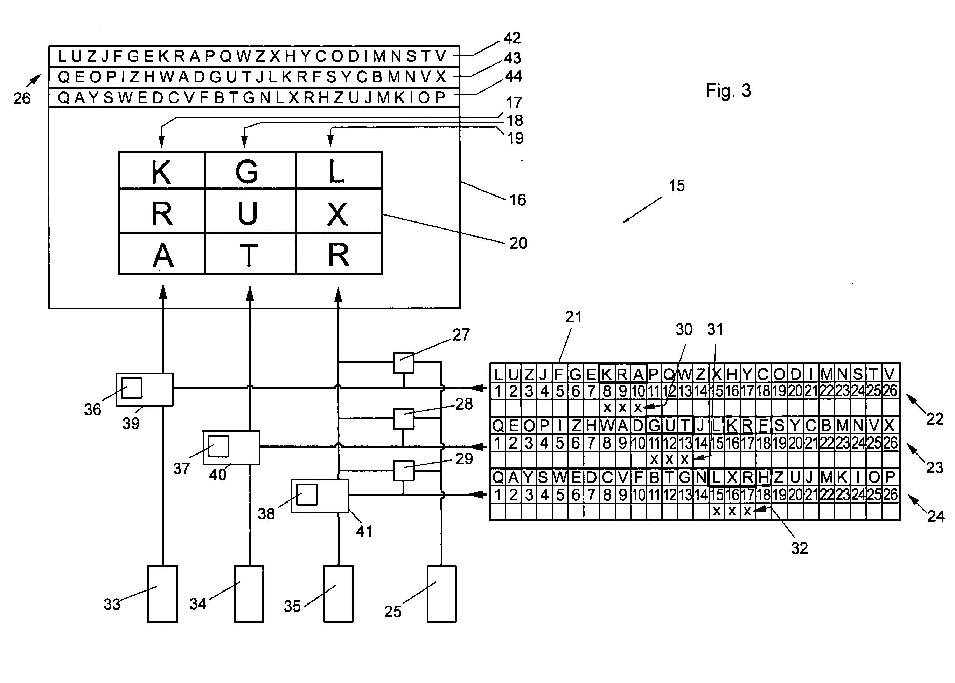

In Fig.3 ist schematisch eine slot machine 15 dargestellt. Es ist eine Anzeige 16 ersichtlich, auf welcher Symbole in drei Reihen 17, 18 und 19 dargestellt werden können, wobei in jeder Reihe drei Symbole angezeigt werden. Die Symbole sind im vorliegenden Fall der Einfachheit halber als Buchstaben ausgebildet. Im Ausführungsbeispiel handelt es sich um eine elektronische slot machine, und es wird daher die elektronische Anzeige 16 derart gestaltet, dass der Eindruck entsteht, dass hinter dem Sichtfenster 20 drei Walzen nebeneinander angeordnet sind, welche an ihrem Umfang Symbole tragen. Jede der Walzen entspricht hierbei einer der Reihen 17, 18 und 19. Die Symbole sind am Umfang der Walze in einer vorbestimmten Reihenfolge angeordnet, wobei die Symbole in dieser Reihenfolge am Sichtfenster 20 vorbeibewegt werden und schließlich an einer vom Zufall bestimmten Position gestoppt werden. Die elektronische slot machine gemäß diesem Ausführungsbeispiel weist hierzu einen Symbolspeicher 21 auf, in welchem drei Gruppen 22, 23 und 24 von Symbolen gespeichert sind. Dabei ist im Symbolspeicher jedem Symbol ein eindeutiger Ordnungswert zugewiesen, wobei im vorliegenden Fall die Ordnungswerte von Zahlen gebildet sind. Die Ordnungswerte bilden eine Reihenfolge, sodass im Speicher 21 innerhalb jeder Gruppe 22, 23, 24 von Symbolen eine bestimmte Reihenfolge der Symbole definiert ist. Jede Gruppe 22, 23, 24 von Symbolen entspricht hierbei einer Walze bzw. einer der Reihen 17, 18, 19, wobei in jeder Symbolgruppe je nach Schwierigkeitsgrad des Spiels 20, 30 oder mehr Symbole enthalten sein können. Im vorliegenden Fall besteht jede Gruppe aus 26 voneinander verschiedenen Symbolen.

Zu Beginn eines jeden Spieles wird die Starttaste 25 betätigt, und es werden zunächst dem Spieler die im Speicher 21 enthaltenen Symbole in der sich aus den Ordnungswerten ergebenden Reihenfolge auf der Anzeige 16 dargestellt. Hierzu ist ein gesonderter Bereich 26 der Anzeige 16 vorgesehen, und es muss der Spieler zu Beginn des Spieles versuchen, sich die Reihenfolge der Symbole zu merken, wobei die Reihenfolge der Symbole in allen drei Symbolgruppen 22, 23, 24 gleich oder voneinander verschieden gewählt sein kann. Die Symbole der Gruppe 22 werden hierbei in der Zeile 42, die Symbole der Gruppe 23 in der Zeile 43 und die Symbole der Gruppe 24 in der Zeile 44 dargestellt. Es ist aber auch denkbar, dass die zu Beginn des Spiels erfolgende Präsentation der Symbole nicht in einem eigenen Bereich 26 der Anzeige erfolgt, sondern dass die Symbole in den Reihen 17, 18 und 19 entsprechend ihrer Reihenfolge fortlaufend angezeigt werden.

Nach einer vorbestimmten Zeitspanne erlischt die Anzeige im Bereich 26, und es werden in Abhängigkeit von in den Zufallsgeneratoren 27, 28, 29 generierten Zufallswerten Symbole auf die Anzeige 16 gebracht. Dabei werden die Symbole aus der Gruppe 22 in der Reihe 17, die Symbole aus der Gruppe 23 in der Reihe 18 und die Symbole aus der Gruppe 24 in der Reihe 19 dargestellt. Im vorliegenden Fall sind in jeder Reihe jeweils drei Symbole in der jeweils definierten Reihenfolge dargestellt, welche jeweils den in den Gruppen 22, 23 und 24 durch Umrandung gekennzeichneten Bereichen entsprechen. Im vorliegenden Beispiel wurden in der Reihe 17 die Symbole "K", "R" und "A", in der Reihe 18 die Symbole "G", "U" und "T" und in der Reihe 19 die Symbole "L", "X" und "R" angezeigt.

Weiters sind Mittel zum Kennzeichnen der gegenwärtig von den zufallsgeneratoren 27, 28, 29 auf die Anzeige 16 gebrachten Symbole vorgesehen. Dies ist in der Figur durch 30, 31 und 32 angedeutet. Ausgehend von den auf der Anzeige 16 angezeigten, durch Zufall ausgewählten Symbolen, kann der Spieler nun durch Geschicklichkeit und Erinnerungsvermögen neue Symbole zur Anzeige bringen, welche möglicherweise mit einem Gewinn verbunden sind. Ein Gewinn wird nämlich in der Regel nur dann ausgezahlt, wenn drei gleiche Symbole nebeneinander angezeigt werden. Im vorliegenden Fall könnte der Spieler versuchen anstelle des Symbols "U" in Reihe 18 das Symbol "R" und anstelle des Symbols "X" in Reihe 19 ebenfalls ein "R" zu erhalten, um drei Symbole "R" nebeneinander zu erhalten. Dazu können die Reihen 18 und 19 entsprechend "weiterbewegt" werden, was einem Weiterdrehen der Walzen bei.einer slot machine entsprechen würde. Zu diesem Zweck muss sich der Spieler die Reihenfolge der Symbole in den Reihen 18 und 19, d.h. die sich aufgrund der Ordnungswerte ergebende Reihenfolge der Symbole in den Symbolgruppen 23 und 24 in Erinnerung rufen. In Kenntnis dieser Reihenfolge muss er feststellen, dass die Reihe 18 um fünf Symbole "weiterbewegt" werden muss, um zum "R" zu gelangen und die Reihe 19 um ein Symbol "weiterbewegt" werden, um zum Symbol "R" zu gelangen. Zu diesem Zweck sind Tasten 33, 34, 35 vorgesehen, wobei die Taste 33 der Reihe 17, die Taste 34 der Reihe 18 und Taste 35 der Reihe 19 zugeordnet ist. Um die Reihen entsprechend "weiterzubewegen" muss die Taste 34 nach fünf Sekunden und die Taste 35 nach einer Sekunde gedrückt werden. Es sind daher Zeitglieder 36, 37 und 38 vorgesehen, welche die Betätigungszeit der einzelnen Tasten 33, 34, 35 erfassen, und es sind weiters Steuereinrichtungen 39, 40 und 41 vorgesehen, welche derart mit den Tasten zusammenwirken, dass in Abhängigkeit von der Betätigungszeit anstelle der vom Zufallsgenerator ausgewählten Symbole die vom Spieler gewünschten Symbole auf die Anzeige 16 gebracht werden. Wenn die Taste 34 ab einem definierten Zeitpunkt nach fünf Sekunden gedrückt wird, bringt die Steuervorrichtung 40 die sich in der sich aus den Ordnungswerten innerhalb der Gruppe 23 ergebenden Reihenfolge fünf Symbole von den mit dem Kennzeichnungsmittel 31 gekennzeichneten Symbolen entfernten Symbole auf der Anzeige 16, wie dies mit den gestrichelten Linien in der Symbolgruppe 23 dargestellt ist. Analog wird beim Tastendruck der Taste 35 nach einer Sekunde die Symbolreihe entsprechend der in der Gruppe 24 festgelegten Reihenfolge um ein Symbol "weiterbewegt", sodass in der Reihe 19 die Symbole um eine Stelle weitergerückt werden.

Erfindungsgemäß ist wiederum in einem Speicher eine Mehrzahl vom vorbestimmten Zeitfenstern abgespeichert, wobei jedem Zeitfenster ein "Weiterbewegen" der Walze um ein Symbol entspricht. Die gespeicherten Zeitfenster sind beispielsweise derart gestaltet, wie in Fig.2 dargestellt.
Soll im oben genannten Beispiel die Reihe 18 um fünf Symbole weiterbewegt werden, so muss die entsprechende Taste zu einem Zeitpunkt betätigt werden, welcher genau 5 Zeiteinheiten nach dem Zeitpunkt liegt, zu welchem das Zeitglied begonnen hat, die Zeit zu messen. Dabei wird nicht nur eine Tastenbetätigung als gültig akzeptiert, welche genau zu einem Zeitpunkt nach 5 Zeiteinheiten erfolgt, sondern auch eine Tastenbetätigung, welche innerhalb des durch das Zeitfenster vorgegebenen Toleranzbereichs t1 liegt. Erfolgt die Tastenbetätigung hingegen im Zeitraum t2 zwischen zwei Zeitfenstern, so bleibt diese Tastenbetätigung für den Spielablauf unberücksichtigt oder es erfolgt eine zufällig gewählte Spielbeeinflussung.

## Patentansprüche

1. Vorrichtung zum Spielen von Geschicklichkeitsspielen mit einer Anzeigevorrichtung, wenigstens einer Taste und einer Steuereinrichtung-zum Beeinflussen des Spielablaufes in Abhängigkeit von einer Tastenbetätigung, wobei die Steuereinrichtung ein Zeitglied umfasst, welches den Zeitpunkt einer Tastenbetätigung erfasst, und die Steuereinrichtung derart ausgebildet ist, dass der Spielablauf in Abhängigkeit vom Zeitpunkt einer Tastenbetätigung beeinflusst wird, **dadurch gekennzeichnet, dass** die Steuereinrichtung einen Speicher für eine Mehrzahl von vorbestimmten Zeitfenstern mit vorbestimmten zeitlichen Abständen zwischen den Zeitfenstern aufweist und die Steuereinrichtung derart ausgebildet ist, dass eine innerhalb eines Zeitfensters erfolgende Tastenbetätigung eine jeweils diesem Zeitfenster zugeordnete vordefinierte Spielbeeinflussung und eine außerhalb der Zeitfenster erfolgende Tastenbetätigung eine zufällige oder keine Beeinflussung des Spielverlaufs bewirkt.

2. Vorrichtung nach Anspruch 1, **dadurch gekennzeichnet, dass** die zeitliche Länge der Zeitfenster veränderbar ist.

3. Vorrichtung nach Anspruch 1 oder 2, **dadurch gekennzeichnet, dass** die zeitliche Länge aller Zeitfenster gleich gewählt ist.

4. Vorrichtung nach Anspruch 1, 2 oder 3, **dadurch gekennzeichnet, dass** der zeitliche Abstand zwischen zwei aufeinanderfolgenden Zeitfenstern gleich gewählt ist.

5. Vorrichtung nach einem der Ansprüche 1 bis 4, **dadurch gekennzeichnet, dass** ein Symbolspeicher mit einer Mehrzahl von Symbolen, wie z.B. Spielkartensymbolen, vorgesehen ist, dass die Anzeigevorrichtung zur Anzeige einer Teilmenge der Mehrzahl von Symbolen ausgebildet ist und dass die Steuereinrichtung derart ausgebildet ist, dass in Abhängigkeit vom Zeitpunkt einer Tastenbetätigung wenigstens eines der auf die Anzeigevorrichtung zur Anzeige gebrachten Symbole ausgetauscht werden kann, wobei eine innerhalb eines Zeitfensters erfolgende Tastenbetätigung die Anzeige eines diesem Zeitfenster zugeordneten, vordefinierten Symbols und eine außerhalb der Zeitfenster erfolgende Tastenbetätigung die Anzeige eines mit Hilfe eines Zufallsgenerators ausgewählten Symbols bewirkt.

6. Vorrichtung nach einem der Ansprüche 1 bis 5, **dadurch gekennzeichnet, dass** wenigstens zwei Zeitfenster gespeichert sind, denen voneinander verschiedene Symbole zugeordnet sind.

7. Vorrichtung nach einem der Ansprüche 1 bis 6, **dadurch gekennzeichnet, dass** die den Zeitfenstern zugeordneten Symbole vor dem Austauschvorgang auf die Anzeige gebracht werden.

8. Vorrichtung nach einem der Ansprüche 1 bis 7, **dadurch gekennzeichnet, dass** die den einzelnen Zeitfenstern zugeordneten Spielbeeinflussungen voneinander verschieden gewählt sind.
